(19) Europäisches Patentamt

European Patent Office

Office européen des brevets

(11) EP 1 534 033 B1

(12) EUROPEAN PATENT SPECIFICATION

(45) Date of publication and mention
of the grant of the patent:
**19.04.2006 Bulletin 2006/16**

(51) Int Cl.:
*H04Q 7/36* (2006.01)      *H04B 17/00* (2006.01)

(21) Application number: **03292910.1**

(22) Date of filing: **24.11.2003**

(54) **Method for simulating a mobile telecommunication network and a simulation apparatus for carrying out the method**

Verfahren zum Simulieren eines Mobilkommunikationsnetzes sowie Simulationsgerät zur Durchführung des Verfahrens

Procédé pour la simulation d'un réseau de communication mobile et appareil de simulation pour exécuter le procédé

(84) Designated Contracting States:
**AT BE BG CH CY CZ DE DK EE ES FI FR GB GR HU IE IT LI LU MC NL PT RO SE SI SK TR**

(43) Date of publication of application:
**25.05.2005 Bulletin 2005/21**

(73) Proprietors:
• **Mitsubishi Electric Information Technology Centre**
**Europe B.V.**
**1119 NS Schiphol Rijk (NL)**
Designated Contracting States:
**FR**
• **MITSUBISHI DENKI KABUSHIKI KAISHA**
**Tokyo 100-8310 (JP)**
Designated Contracting States:
**AT BE BG CH CY CZ DE DK EE ES FI GB GR HU IE IT LI LU MC NL PT RO SE SI SK TR**

(72) Inventor: **Voyer, Nicolas**
**CS 10806**
**35708 Rennes cedex 7 (FR)**

(74) Representative: **Maillet, Alain**
**SCP Le Guen & Maillet,**
**5, Place Newquay,**
**B.P. 70250**
**35802 Dinard Cedex (FR)**

(56) References cited:
EP-A- 0 856 961          WO-A-01/06684
GB-A- 2 232 850

• **MASTRANGELO J F ET AL: "A NEW WIDEBAND HIGH FREQUENCY CHANNEL SIMULATION SYSTEM" IEEE TRANSACTIONS ON COMMUNICATIONS, IEEE INC. NEW YORK, US, vol. 45, no. 1, 1997, pages 26-33, XP000642234 ISSN: 0090-6778**

**Description**

The present invention concerns a method for simulating a mobile telecommunication network and a simulation apparatus for carrying out the method. Such a simulation apparatus can be used in a test apparatus for testing a device, for example a mobile terminal of a mobile telecommunication network.

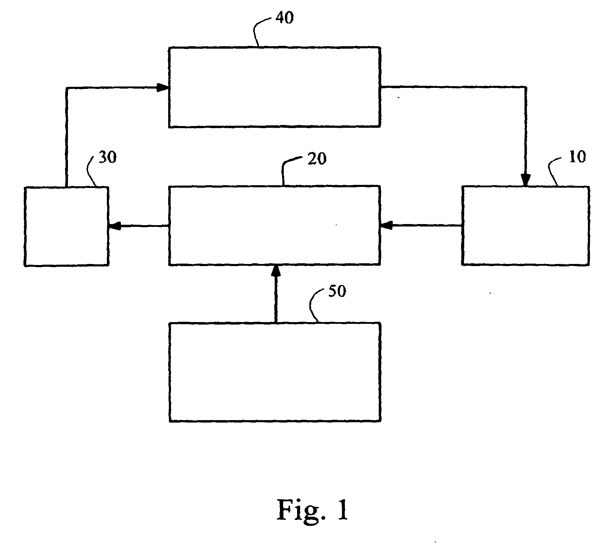

A simulation apparatus, as such the apparatus shown in Fig. 1, generally comprises a base stations simulation unit 10 that generates simulated signals transmitted by a plurality of base stations of a telecommunication network and a channels simulation unit 20 that inputs the signals from the unit 10, that applies to each inputted signal a response of each channel between a base station and a mobile terminal of the telecommunication network and outputs a signal which is representative of the signal resulting from the combination of the signals transmitted by the base stations and as received by a mobile terminal.

Generally, the channels simulation unit 20 simulates one or several propagation channels, each channel being propagated by following one or several paths according to a multi-paths effect, and being faded according to a fast fading effect.

It still comprises a mobile terminal unit 30 that can be either a simulated one or a true one in case the simulation apparatus is used as a test apparatus, the mobile terminal 30 being then the terminal under test. The mobile terminal unit 30 inputs the signal outputted by the unit 20 and outputs a response that is transmitted to a report unit 40. On basis of the signal received from the mobile terminal unit 30, the report unit 40 transmits signals to the unit 10 that give the operation conditions of each of the base stations of the telecommunication network and that serve to generate then the simulated base stations signals.

It still comprises a channel parameter calculation unit 50 intended to deliver channel parameters to the channels simulation unit 20 on basis of simulated displacements of each of the mobile terminals of the telecommunication network around each of the base stations.

Such a simulation apparatus works step by step. In each step, the mobility unit 50 determines the coordinates of the mobile terminals of the network around the base stations and delivers the channels parameters. Meanwhile, the base stations simulation unit 10 generates simulated signals on basis of the signals transmitted by the report unit 40 about the previous step. Based on the channel parameters delivered by the mobility unit 50 and on the simulated signals delivered by the simulation unit 10, the channels simulation unit 20 generates a signal which results on the combination of the responses of the channels between the base stations and the mobile terminal and which is delivered to the mobile terminal 30. The response of the mobile terminal 30 is inputted to the report unit 40 which gives a report of the simulation step and which generates the signals about the operating conditions of the base stations to the base stations simulation unit 10 for further steps.

Each step must be achieved in a time that enables the overall simulation to be made in a real time, which means a time that is the same as the time required by the true operations of the simulation. Due to this constraint, as above mentioned, channels simulation unit generally generates one or several propagation channel parameters the values of which represent global effects of the propagation of the different beams of each channel over different paths between a base station and a mobile terminal.

A simulation apparatus for simulating a mobile telecommunication network for the purpose of testing mobile terminal devices is for example disclosed in EP 0 856 961 A2.

Besides the simulation of telecommunication channels, ray tracing tools are known to give at any spot of a telecommunication network all the wave propagation path parameters, such as the amplitude $A_k$, the delay $T_k$, the phase $\varphi_k$ and the incidence direction $\theta_k$ relative to a reference axis of a coordinates system of all the paths k along which the waves propagate between a transmitter and a receiver. Such tools enable the multi-paths effects, the dispersion effects, the diffraction effects, generally speaking all the effects linked to the electromagnetic propagation, to be modelised including the fast fading effect.

Note that thereafter the incidence direction $\theta_k$ is always defined relatively to a reference axis of a coordinates system.

In order for the channels simulation unit to make simulation with an accuracy and a sharpness similar to those of ray tracing tools, taking the multi-paths effects and the fast-fading effects into account, it would be interesting to use tools such as those of ray tracing. However, they generally require a huge quantity of calculations to determine the wave propagation path parameter for each path of a channel that should be achieved in a time that enables the simulation to be made in real time. For example, in order to completely and sharply characterize the temporal evolution of a channel response, the parameters of all the paths constituting this channel must be known at least every 1/100 of the wave length of the signal emitted by the base station, which is for a 2 GHz signal, equal to 15/100 cm. Such a distance is covered by a mobile terminal that moves at a speed of 100 km/h in 54 $\mu$s. So, every 54$\mu$s, a new set of wave propagation path parameters must be calculated which is not in practice nowadays achievable with current computers.

To overcome this problem, the propagation parameters could be calculated at different predetermined times and for times between two consecutive predetermined times, they could be interpolated. Nevertheless, if such a solution would not raise any problem regarding the incidence direction $\theta_k$, the amplitude $A_k$, the delay $T_k$ for which the interpolation would be a linear interpolation, this would not be the case for the phase $\varphi_k$ for which the interpolation could not be linear since the value of the phase $\varphi_k$ varies between $-\pi$ and $\pi$, this variation occurring a number of times between two consecutive predetermined times.

The aim of the present invention is to provide a method for simulating a mobile telecommunication network that simulates the channels between each base station and each or a mobile terminal with an accuracy and a sharpness similar to those of ray tracing tools, taking the multi-paths effects and the fast-fading effects into account and that do not present the problems above set out. Moreover, the aim of the present invention is to provide such a method that uses results of a ray tracing method.

For that purpose, a method for simulating a mobile telecommunication network comprising at least one base station and one mobile terminal, said method according to the invention is of the type comprising at least a step of calculating channel parameters of the channel between said at least base station and said at least mobile terminal for consecutive times of the mobile terminal displacement.

It is characterized in that said step of calculating comprises :

a step for generating wave propagation path parameters for each of the paths along which the waves between said at least base station and said at least mobile terminal propagate and for some predetermined times, and
a step for generating said parameters for other times between a specific time and the following one, the values of said wave propagation path parameters being then linearly interpolated, the phase $\varphi_k$ excepted for which interpolation is made in function of the displacement parameters of the mobile terminal. For example, this interpolation depends upon the variation of the phase $\varphi_k$ with time at the considered time.

According to one embodiment of the present invention, the wave propagation path parameters that are linearly interpolated are the amplitude $A_k$, the incidence direction $\theta_k$ and the delay $T_k$ of the wave that follows that path k.

The present invention concerns also a simulation apparatus for simulating a mobile telecommunication network comprising at least one base station and one mobile terminal, said apparatus comprising means for calculating channel parameters of the channel between said at least base station and said at least mobile terminal for consecutive times of the mobile terminal displacement.

It is characterized in that it comprises :

means for generating wave propagation path parameters for each of the paths along which the waves between said at least base station and said at least mobile terminal propagate and for some predetermined times, and
means for generating said parameters for other times between a specific time and the following one, the values of said wave propagation path parameters being then linearly interpolated, the phase $\varphi_k$ excepted for which the interpolation is made in function of the displacement parameters of the mobile terminal. For example, the interpolation of the phase $\varphi_k$ depends upon the variation thereof with time at the time considered.

The characteristics of the present invention will emerge from a reading of the following description given in relation to the appended drawings, amongst which :

Fig. 1 depicts a functional diagram of a simulation apparatus according to the present invention, and,
Fig. 2 shows a telecommunication network with a base station emitting a beam toward a mobile terminal at three different times

The present invention concerns a simulator of a mobile telecommunication network which presents the structure represented in Fig. 1. It then comprises a base stations simulation unit 10, a channels simulation unit 20 that receives the simulated signals generated by the base stations simulation unit 10 and processes them to simulate the channels between the base stations of the network and each or a mobile terminal, a mobile terminal simulation unit 30 or a true mobile terminal 30 that receives the simulated processed signals delivered by the unit 20, a report unit 40 that receives the signals transmitted but the unit 30 in response to the simulated signals delivered by the unit 20, furnishes a report to the user and generates operation conditions signals to the base stations simulation unit 10.

It still comprises a channel parameters calculation unit 50 intended to deliver channel parameters to the channels simulation unit 20 on basis of simulated displacements of at least one mobile terminal of the telecommunication network around the base stations.

According to the invention, the channel parameters calculation unit 50 generates wave propagation path parameters for all the different paths between a base station and a mobile terminal. For each path referenced as to k between a base station and a mobile terminal, the unit 50 generates the values taken at different consecutive times of a mobile terminal displacement by the amplitude $A_k$, the phase $\varphi_k$, the incidence direction $\theta_k$ and the delay $T_k$ of the

3

wave that follows that path k.

Furthermore, the present invention relies on the fact that some of the wave propagation path parameters vary less quickly in function of the displacement of the mobile terminal than others. Typically, whereas the phase $\varphi_k$ varies from 0 to $2\pi$ (or from $-\pi$ to $\pi$) for a displacement of a mobile terminal projected to the beam axis equal to a wavelength, the amplitude $A_k$, the incidence direction $\theta_k$ and the delay $T_k$ remains nearly constant, for example, over displacements of the mobile terminal not more than ten wavelengths.

According to the invention, a set of wave propagation path parameters for each path **k**, i.e. the amplitude $A_k$, the incidence direction $\theta_k$, the delay $T_k$ and the phase $\varphi_k$ is calculated for specific or predetermined times of the mobile terminal. For example, two consecutive times can be separated by about ten periods of the waves. Furthermore, for times between a specific time and the following one, the values of the parameters are interpolated from the values taken at both times. As to the values of the amplitude $A_k$, the incidence direction $\theta_k$ and the delay $T_k$, they are linearly interpolated.

The values of the phase $\varphi_k$ are interpolated from the values taken for one of the specific times and depends upon the displacement parameters of the mobile, i.e. its speed and its displacement direction.

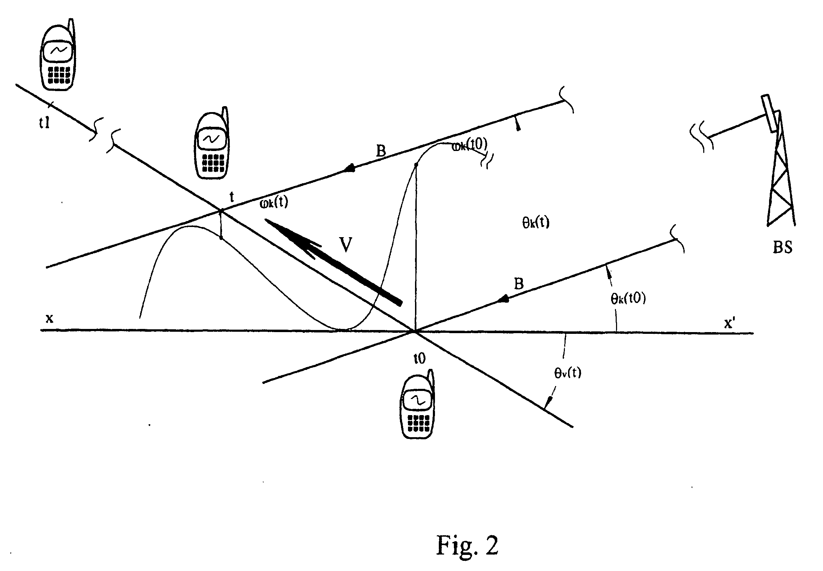

Fig. 2 shows a mobile terminal MT at three different times t0, t and t1. Times t0 and t1 are assumed to be specific or predetermined times whereas t is an interpolating time. A base station BS emits a beam B toward the mobile terminal MT following a path referenced as to **k**. The direction of the beam B relative to the reference axis xx' is $\theta_k$(t0) at time t0 and $\theta_k$(t) at time t.

For time t0, a set of wave propagation path parameters for that beam B is calculated, namely its amplitude $A_k$(t0), its incidence direction $\theta_k$(t0), its delay $T_k$(t0) and its phase $\varphi_k$(t0).

Similarly, for time t1, a set of wave propagation path parameters for that beam B is calculated, namely its amplitude $A_k$(t1), its incidence direction $\theta_k$(t1), its delay $T_k$(t1) and its phase $\varphi_k$(t1).

For time t (time t is not a specific time but rather an interpolating time comprised between t0 and t1), the mobile terminal has moved according to a speed vector V toward a direction forming at time t an angle $\theta_v$(t) with the reference axis xx'.

A new set of wave propagation path parameters for that beam is calculated by interpolation from the values taken at both times t0 and t1. For example, the amplitude $A_k$(t) can be calculated by linear interpolation according to the following expression :

$$A_k(t) = A_k(t0) + \left\{ \left( \frac{t - t0}{t1 - t0} \right) x \left( Ak(t1) - Ak(t0) \right) \right\}$$

This is the same for all the other propagation parameters, the phase $\varphi_k$(t) excepted.

According to the invention, the phase $\varphi_k$(t) at time t is interpolated from the value $\varphi_k$(t0) calculated for time t0 and in function of the variation $d_{\varphi k}$(t)/dt of the phase with the time and at time t according to the following relation :

$$\varphi_k(t) = \varphi_k(t0) + d\varphi_k(t)/dt \; x \; (t - t0).$$

As it can be seen from Fig. 2, the variation of the phase will be $2\pi$ when the projection of displacement of the mobile terminal over the axis of the beam path will be equal to a wavelength $\lambda$. The projection of displacement of the mobile terminal over the axis of the beam path is equal to the speed V of said terminal multiplied by the cosine of the angle $\{\theta_k(k) - \theta_v(t)\}$ formed at time t between the beam axis and the speed vector V and multiplied by the variation of time (t - t0) as considered $\{= V \cos (\theta_k(t) - \theta_v(t)) (t - t0)\}$. For that projection, the variation of phase $\Delta_{\varphi k}$(t). Thus the variation $\Delta_{\varphi k}$(t) of the phase between time t and time t0 will be :

$$\Delta\varphi_k(t) = \frac{2\pi(t - t0)}{\lambda} V \cos\{\theta_k(t) - \theta_v(t)\} = \frac{2\pi f(t - t0)}{c} V \cos\{\theta_k(t) - \theta_v(t)\}$$

where c is the celerity of light and f is the frequency of the beam emitted by the base station BS.

So, the variation $d_{\varphi k}$(t)/dt of the phase with the time is obtained from the following expression :

$$d\varphi_k(t)/dt = \frac{2\pi f}{c} V \cos\{\theta_k(t) - \theta_v(t)\}$$

Note that the variation $d_{\varphi k}(t)/dt$ of the phase with the time depends upon the speed V of the mobile terminal and upon the angle $\theta_v(t)$ formed at time t between the reference axis xx' and the speed vector. Both are displacement parameters of the mobile terminal.

The steps of method of the present invention can be performed by a computer program when it is run on a computer, and this program can be embodied on a computer readable medium.

**Claims**

1. Method for simulating a mobile telecommunication network comprising at least one base station and one mobile terminal, said method comprising at least a step of calculating channel parameters of the channel between said at least base station and said at least mobile terminal for consecutive times of the mobile terminal displacement, **characterized in that** said step of calculating comprises :

   a step for generating wave propagation path parameters for each of the paths along which the waves between said at least base station and said at least mobile terminal propagate and for some predetermined times, and a step for generating said parameters for other times between a specific time and the following one, the values of said wave propagation path parameters being then linearly interpolated, the phase $\varphi_k$ excepted for which interpolation is made in function of the displacement parameters of the mobile terminal.

2. Method for simulating a mobile telecommunication network according to claim 1, **characterized in that** the interpolation for the phase $\varphi_k$ depends upon the variation of the phase $\varphi_k$ with time at the considered time.

3. Method for simulating a mobile telecommunication network according to claim 1 or 2, **characterized in that** the wave propagation path parameters that are linearly interpolated are the amplitude $A_k$, the delay $T_k$ and the incidence direction $\theta_k$ relative to a reference axis of a coordinates system of the wave that follows that path k.

4. Method for simulating a mobile telecommunication network according to claim 3, **characterized in that** the variation $d_{\varphi k}/dt$ of the phase with time is obtained from the following expression :

$$d\varphi_k(t)/dt = \frac{2\pi f}{c} V \cos\{\theta_k(t) - \theta_v(t)\}$$

   wherein f is the frequency of the considered wave, c is the celerity of light, V the speed of the mobile terminal and $\theta_v(t)$ is the angle formed at time t between the speed vector of the mobile terminal and the reference axis of the coordinate system.

5. Simulation apparatus for simulating a mobile telecommunication network comprising at least one base station and one mobile terminal, said apparatus comprising means for calculating channel parameters of the channel between said at least base station and said at least mobile terminal for consecutive times of the mobile terminal displacement, **characterized in that** it comprises :

   means for generating wave propagation path parameters for each of the paths along which the waves between said at least base station and said at least mobile terminal propagate and for some predetermined times, and means for generating said parameters for other times between a specific time and the following one, the values of said wave propagation path parameters being then linearly interpolated, the phase $\varphi_k$ excepted for which the interpolation is made in function of the displacement parameters of the mobile terminal.

**6.** Apparatus for simulating a mobile telecommunication network according to claim 5, **characterized in that** the interpolation for the phase $\varphi_k$ depends upon the variation of the phase $\varphi_k$ with time at the considered time.

**7.** Apparatus for simulating a mobile telecommunication network according to claim 5 or 6, **characterized in that** the wave propagation path parameters that are linearly interpolated are the amplitude $A_k$, the incidence direction $\theta_k$ and the delay $T_k$ of the wave that follows that path k, the parameter that varies strongly between a specific time and the following being the phase $\varphi_k$.

**8.** Apparatus for simulating a mobile telecommunication network according to claim 7, **characterized in that** the variation $d_{\varphi k}/dt$ of the phase with time is obtained from the following expression :

$$d\varphi_k(t)/dt = \frac{2\pi f}{c} V \cos\{\theta_k(t) - \theta_v(t)\}$$

wherein f is the frequency of the considered wave, c is the celerity of light, V the speed of the mobile terminal and $\theta_v(t)$ is the angle formed at time t between the speed vector of the mobile terminal and the reference axis of the coordinate system.

**9.** Computer program comprising computer program code means adapted to perform all the steps of claims 1 to 4 when said program is run on a computer.

**10.** Computer program as claimed in claim 9 embodied on a computer readable medium.

**Revendications**

**1.** Méthode de simulation d'un réseau téléphonique mobile comprenant au moins une station de base et un terminal mobile, ladite méthode comprenant au moins une étape de calcul de paramètres du canal entre ladite au moins station de base et ledit au moins terminal pour les temps consécutifs du déplacement du terminal mobile, **caractérisée en ce que** ladite étape de calcul comprend :

- une étape pour générer des paramètres de trajet de propagation d'ondes pour chacun des trajets le long desquels les ondes entre ladite au moins station de base et ledit au moins terminal mobile se propagent et pour quelques temps pré-déterminés ; et
- une étape pour générer lesdits paramètres pour les autres temps entre un temps spécifique et le suivant, les valeurs desdits paramètres de trajets de propagation d'ondes étant ensuite linéairement interpolés, la phase $\varphi_k$ exceptée, pour laquelle l'interpolation est faîte en fonction des paramètres de déplacement du terminal mobile.

**2.** Méthode de simulation d'un réseau de télécommunications mobile selon la revendication 1, **caractérisée en ce que** l'interpolation pour la phase $\varphi_k$ dépend de la variation de la phase $\varphi_k$ avec le temps au moment considéré.

**3.** Méthode de simulation d'un réseau de télécommunications mobile selon la revendication 1 ou 2, **caractérisée en ce que** les paramètres de trajet de propagation d'ondes qui sont linéairement interpolés selon l'amplitude $A_k$, le retard $t_k$ et la direction d'incidence $\theta_k$, relativement à un axe de référence dans un système de coordonnées de l'onde qui suit ce trajet **k**.

**4.** Méthode de simulation d'un réseau de télécommunications mobile selon la revendication 3, **caractérisée en ce que** la variation $d\varphi_k/dt$ de la phase avec le temps est obtenue à partir de l'expression suivante :

$$d\varphi_k(t)/dt = \frac{2\pi f}{c} V \cos\{\theta_k(t) - \theta_v(t)\}$$

dans laquelle f est la fréquence de l'onde considérée, c est la vitesse de la lumière, V est la vitesse du terminal mobile et $\theta_v(t)$ est l'angle formé au temps t entre le vecteur vitesse du terminal mobile et l'axe de référence du système de coordonnées.

5. Appareil de simulation pour simuler un réseau de télécommunications mobile comprenant au moins une station de base et un terminal mobile, ledit appareil comprenant des moyens pour calculer les paramètres du canal entre ladite au moins station de base et ledit terminal mobile pour des temps consécutifs du déplacement du terminal mobile, **caractérisé en ce qu'**il comprend :

   - des moyens pour générer des paramètres de trajet de propagation d'ondes pour chacun des trajets le long desquels les ondes entre ladite au moins station de base et ledit au moins terminal mobile se propagent et pour quelques temps pré-déterminés ; et
   - des moyens pour générer lesdits paramètres pour les autres temps compris entre un temps spécifique et le suivant, les valeurs desdits paramètres de trajet de propagation d'ondes étant ensuite linéairement interpolés, la phase $\varphi_k$ exceptée, pour laquelle l'interpolation est faite en fonction des paramètres de déplacement du terminal mobile.

6. Appareil pour la simulation de réseau de télécommunications mobile selon la revendication 5, **caractérisé en ce que** l'interpolation pour la phase $\varphi_k$ dépend de la variation de la phase $\varphi_k$ avec le temps au moment considéré.

7. Appareil pour simuler un réseau de télécommunications mobile selon la revendication 5 ou 6, **caractérisé en ce que** les paramètres de trajets de propagation d'ondes qui sont linéairement interpolés sont l'amplitude $A_k$, la direction d'incidence $\theta_k$, et le retard $t_k$ de l'onde qui suit le trajet k, le paramètre qui varie fortement entre un temps spécifique et le suivant étant la phase $\varphi_k$.

8. Appareil pour la simulation d'un réseau de télécommunications mobile selon la revendication 7, **caractérisé en ce que** la variation $d\varphi_K/dt$ de la phase avec le temps est obtenue à partir de l'expression :

$$d\varphi_k(t)/dt = \frac{2\pi f}{c} V \cos\{\theta_k(t) - \theta_v(t)\}$$

dans laquelle f est la fréquence de l'onde considérée, t la vitesse de la lumière, V la vitesse du terminal mobile et $\theta_v(t)$ est l'angle formé au temps t entre le vecteur vitesse du terminal mobile et l'axe de référence du système de coordonnées.

9. Programme d'ordinateur comprenant les moyens de code du programme d'ordinateur adapté pour mettre en oeuvre toutes les étapes des revendications 1 à 4 quand ledit programme se déroule sur un ordinateur.

10. Programme d'ordinateur tel que revendiqué à la revendication 9, inclus sur un milieu lisible par un ordinateur.

**Patentansprüche**

1. Verfahren zum Simulieren eines Mobilfunk-Telekommunikationsnetzwerks mit wenigstens einer Basisstation und einem mobilen Endgerät, wobei das Verfahren wenigstens einen Schritt zum Berechnen von Kanalparametern des Kanals zwischen der wenigstens einen Basisstation und dem wenigstens einen mobilen Endgerät für aufeinander folgende Male einer Verlagerung des mobilen Endgeräts aufweist, **dadurch gekennzeichnet, dass** der Schritt zum Berechnen Folgendes aufweist:

   einen Schritt zum Erzeugen von Wellenausbreitungspfadparametern für jeden der Pfade, entlang welchen sich die Wellen zwischen der wenigstens einen Basisstation und dem wenigstens einen mobilen Endgerät ausbreiten, und für einige vorbestimmte Zeiten, und
   einen Schritt zum Erzeugen der Parameter für andere Zeiten zwischen einer spezifischen und der folgenden Zeit, wobei die Werte der Wellenausbreitungspfadparameter dann mit Ausnahme der Phase $\varphi_k$, für welche eine Interpolation in einer Funktion der Verlagerungsparameter des mobilen Endgeräts durchgeführt wird, linear interpoliert werden.

2. Verfahren zum Simulieren eines Mobilfunk-Telekommunikationsnetzwerks nach Anspruch 1, **dadurch gekenn-**

**zeichnet, dass** die Interpolation für die Phase $\varphi_k$ von der Änderung bzw. Variation der Phase $\varphi_k$ mit der Zeit bei der betrachteten Zeit abhängt.

3. Verfahren zum Simulieren eines Mobilfunk-Telekommunikationsnetzwerks nach Anspruch 1 oder 2, **dadurch gekennzeichnet, dass** die Wellenausbreitungspfadparameter, die linear interpoliert sind, die Amplitude $A_k$, die Verzögerung $T_k$ und die Einfallsrichtung $\theta_k$ relativ zu einer Referenzachse eines Koordinatensystem der Welle sind, die dem Pfad k folgt.

4. Verfahren zum Simulieren eines Mobilfunk-Telekommunikationsnetzwerks nach Anspruch 3, **dadurch gekennzeichnet, dass** die Variation $d_{\varphi k}/dt$ der Phase mit der Zeit aus dem folgenden Ausdruck erhalten wird:

$$d\varphi_k(t)/dt = \frac{2\pi f}{c} \, V \cos\{\theta_k(t) - \theta_v(t)\}$$

wobei f die Frequenz der betrachteten Welle ist, c die Lichtgeschwindigkeit ist, V die Geschwindigkeit des mobilen Endgeräts ist und $\theta_v(t)$ der Winkel ist, der zur Zeit t zwischen dem Geschwindigkeitsvektor des mobilen Endgeräts und der Referenzachse des Koordinatensystems ausgebildet ist.

5. Simulationsvorrichtung zum Simulieren eines Mobilfunk-Telekommunikationsnetzwerks mit wenigstens einer Basisstation und einem mobilen Endgerät, wobei die Vorrichtung eine Einrichtung zum Berechnen von Kanalparametern des Kanals zwischen der wenigstens einen Basisstation und dem wenigstens einen mobilen Endgerät für aufeinander folgende Male einer Verlagerung des mobilen Endgeräts aufweist, **dadurch gekennzeichnet, dass** sie Folgendes aufweist:

eine Einrichtung zum Erzeugen von Wellenausbreitungspfadparametern für jeden der Pfade, entlang welchen sich die Wellen zwischen der wenigstens einen Basisstation und dem wenigstens einen mobilen Endgerät ausbreiten, und für einige vorbestimmte Zeiten, und
eine Einrichtung zum Erzeugen der Parameter für andere Zeiten zwischen einer spezifischen und der folgenden Zeit, wobei die Werte der Wellenausbreitungspfadparameter dann mit Ausnahme der Phase $\varphi_k$, für welche die Interpolation in einer Funktion der Verlagerungsparameter des mobilen Endgeräts durchgeführt wird, linear interpoliert werden.

6. Vorrichtung zum Simulieren eines Mobilfunk-Telekommunikationsnetzwerks nach Anspruch 5, **dadurch gekennzeichnet, dass** die Interpolation für die Phase $\varphi_k$ von der Änderung bzw. Variation der Phase $\varphi_k$ mit der Zeit bei der betrachteten Zeit abhängt.

7. Vorrichtung zum Simulieren eines Mobilfunk-Telekommunikationsnetzwerks nach Anspruch 5 oder 6, **dadurch gekennzeichnet, dass** die Wellenausbreitungspfadparameter, die linear interpoliert sind, die Amplitude $A_k$, die Einfallsrichtung $\theta_k$ und die Verzögerung $T_k$ der Welle sind, die diesem Pfad k folgt, wobei der Parameter, der sich zwischen einer spezifischen und der folgenden Zeit stark ändert, die Phase $\varphi_k$ ist.

8. Vorrichtung zum Simulieren eines Mobilfunk-Telekommunikationsnetzwerks nach Anspruch 7, **dadurch gekennzeichnet, dass** die Variation $d\varphi_k/dt$ der Phase mit der Zeit aus dem folgenden Ausdruck erhalten wird:

$$d\varphi_k(t)/dt = \frac{2\pi f}{c} \, V \cos\{\theta_k(t) - \theta_v(t)\}$$

wobei f die Frequenz der betrachteten Welle ist, c die Lichtgeschwindigkeit ist, V die Geschwindigkeit des mobilen Endgeräts ist und $\theta_v(t)$ der Winkel ist, der zur Zeit t zwischen dem Geschwindigkeitsvektor des mobilen Endgeräts und der Referenzachse des Koordinatensystems ausgebildet ist.

9. Computerprogramm mit einer Computerprogrammcodeeinrichtung, die zum Durchführen aller Schritte der Ansprüche 1 bis 4 geeignet ist, wenn das Programm auf einem Computer abläuft.

10. Computerprogramm nach Anspruch 9, das auf einem computerlesbaren Medium verkörpert ist.

Fig. 1

Fig. 2